# EUROPEAN PATENT APPLICATION

(11) **EP 1 714 824 A2**
(43) Date of publication of application: **25.10.2006**
(21) Application number: 06015801.1
(22) Date of filing: 31.03.1997
(51) Int. Cl.: B60L 9/24, H02M 7/155, H02M 7/162, H02M 7/17

(54) **Control apparaus for pwm converter**

(62) Divisional of application: 97908559.4
(71) Applicant: MITSUBISHI DENKI KABUSHIKI KAISHA, Chiyoda-ku, Tokyo 100-8310 (JP)
(72) Inventor: Nakamoto, Noriaki, Tokyo 100-0005 (JP)
(74) Representative: Maury, Richard Philip

(57) **Abstract**

A control apparatus for a PWM converter can easily reduce harmonic waves for each formation of electric cars without making a zero-phase detection tolerance of a reference signal severe. In the control apparatus, phase differences of converter units, an n-fold component of the carrier frequency component of a primary current is detected, phases are finely adjusted with respect to pre-designated phase differences such that the n-fold component is set at a desired value or more, and an error of detection precision of reference frequencies of the converters and a phase error caused by a difference between delays of ON/OFF-switching operations are corrected, so that a more ideal phase difference operation can be realized.

## Description

### Technical Field

The present invention relates to a control apparatus for a PWM converter for controlling the operation of a plurality of converter units each comprising a plurality of PWM (pulse width modulation control) converter to control a plurality of electric car loads mounted on electric cars of the same formation.

### Background Art

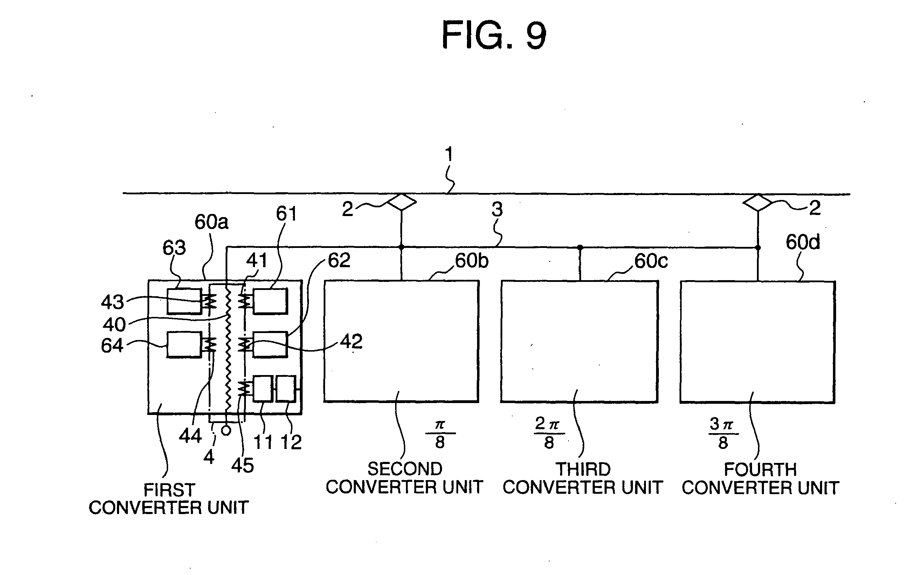

FIG. 9 shows an application of a control apparatus for a conventional PWM converter described for example in Japanese Patent Laid-Open No. 7-274517. In FIG. 9, a plurality of pantographs 2 for feeding a current to an electric car are connected to a single-phase current power supply line 1, and converter units 60a to 60d serving as PWM converters in the electric cars of the same formation are connected in parallel to the pantographs 2 through a high-voltage straight pull 3 in the electric cars. Each of the respective converter units 60a to 60d comprises one primary winding 40 connected to the single-phase current power supply line 1 through the high-voltage straight pull 3 and the pantograph 2, a plurality of secondary windings 41 to 44, a transformer 4 having one ternary winding 45, a plurality of converters 61 to 64'independently connected to the secondary windings 41 to 44 of the transformer 4, a PWM controller 11 connected to the ternary winding 45 of the transformer 4, and a carrier phase difference setting unit 12 connected to the output side of the PWM controller 11. In the respective converter units 60a to 60d, the carrier phase difference setting units 12 set phase differences of 0, π/8, 2π/8, and 3π/8 with respect to a reference phase detected from the ternary winding 45 of the transformer 4.

The operation of the prior art will be described below. Currents from the secondary windings 41 to 44 of the transformer 4 are switched at offset timings to reduce a harmonic wave. In the formation of electric cars, phase differences of π/2n are given to respective carrier waves among the converter units 60a to 60d, so that harmonic currents generated by the converter units 60a to 60d are canceled.

However, in the conventional device described above, in order to perform a phase-difference operation as described above, phase differences predetermined depending on the number of converter units 60a to 60d must be set, and the precision of zero-phase (zero-cross) detection of the voltage, serving as a reference signal, of the ternary winding 45 must be high in each of the converter units 60a to 60d. For this reason, if the tolerance of zero-cross detection of the reference signal is not very severely set for each of the converter units 60a to 60d, it is difficult to ideally reduce a harmonic wave.

JP-A-6351106 discloses a control apparatus for a PWM converter with reduced harmonics. The current Is of the PWM converter is compared to the setting current I*s. The resulting current is fed to a regulator. A carrier frequency is set by a carrier frequency setter and is fed to a carrier generator. A comparator compares the carrier with the difference between the converter voltage and the output of the regulator.

The present invention provides a control apparatus as defined in Claim 1.

The present invention can easily reduce a harmonic wave for each formation of electric cars without making the tolerance of zero-phase (zero-cross) detection of a reference signal severe.

### Brief Description of Drawings

FIG. 1 is a view showing the arrangement of the outline of a control apparatus for a PWM converter according to an embodiment of the present invention.
FIG. 2 is a detailed circuit diagram of the control apparatus.
FIG. 3 is a block diagram showing the arrangement of a carrier phase difference setting device in FIG. 2.
FIG. 4 is a graph showing an example of a primary current waveform of the PWM converter.
FIG. 5 is a waveform chart of a secondary winding current of the PWM converter when superposed current waveforms have the same phase.
FIG. 6 is a waveform chart of a secondary winding current of the PWM converter when superposed current waveforms have phases which are offset from each other.
FIG. 7 is a waveform chart of a secondary winding current of the PWM converter when superposed current waveforms have phases which are offset from each other.
FIG. 8 is a waveform chart obtained when the phases of carrier waves according to the embodiment of the present invention are offset from each other.
FIG. 9 is a view showing the arrangement of the outline of a control apparatus for a conventional PWM converter.

### Best Mode for Carrying Out the Invention

The present invention will be described in detail with reference to the accompanying drawings. The same reference numerals as in the prior art in FIG. 9 denote the same parts in embodiments of the present invention to be described below.

### Embodiment 1

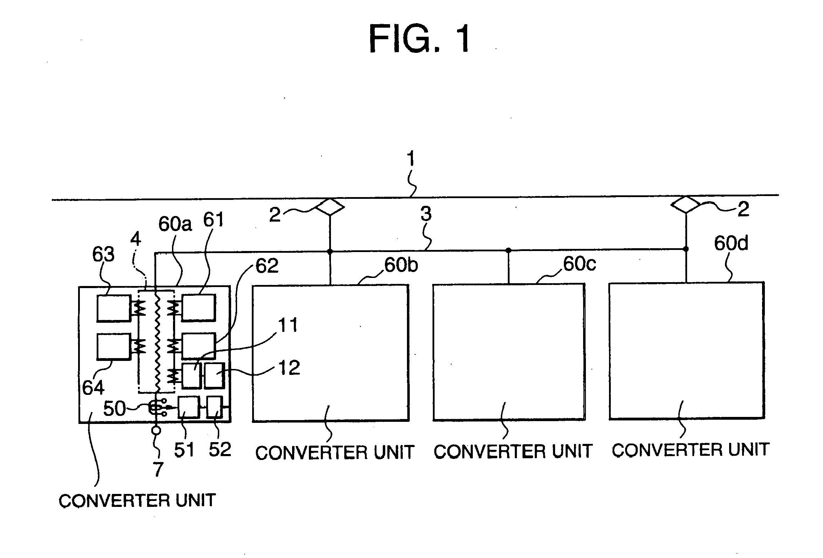

FIG. 1 shows the arrangement of the outline of a control apparatus for a PWM converter according to Embodiment 1 of the present invention. Referring to FIG. 1, a plurality of converter units 60a to 60d are connected to an AC line 1 through a pantograph 2 and a high-voltage straight pull 3. Each of the converter units 60a to 60d comprises one transformer 4, a phase difference adjusting means 5, a PWM control device 11, a carrier phase difference setting device 12, a plurality of converters 61 to 64, and inverters 81 and 83.

The transformer 4 has a primary winding 40 connected to the AC line 1 through the pantograph 2 and the high-voltage straight pull 3, a plurality of secondary windings 41 to 44, and a ternary winding 45. The secondary windings 41 to 44 of the transformer 4 are connected to the converters 61 to 64, respectively. The output sides of the converters 61 and 62 are connected to an inverter 85, and the output sides of the converters 61 to 64 are connected to an inverter 87.

AC outputs from the secondary windings 41 and 42 of the transformer 4 are converted into DC currents by the converters 61 and 62 and superposed each other. The superposed current is converted into a three-phase AC current by the inverter 81. Loads such as AC motors 85 and the like are driven by the three-phase AC current serving as a power supply. Similarly, AC outputs from the secondary windings 43 and 44 of the transformer 4 are converted into DC currents by the converters 63 and 64 and superposed each other. The superposed current is converted into a three-phase AC current by the inverter 83. Loads such as AC motor 87 and the like are driven by the three-phase AC current serving as a power supply to move electric cars.

The phase difference adjusting means 5 comprises a current detector 50 connected to the primary winding 40 of the transformer 4, a carrier frequency component detector 51, connected to the output side of the primary current detector 50, for detecting the carrier frequency component of a primary current, and a phase difference adjuster 52, connected to the carrier frequency component detector 51, for adjusting the phase of the carrier frequency component to supply the carrier frequency component to the converters 61 to 64. The phase difference adjuster 52 adjusts phase differences between carrier frequencies supplied to the converters 61 to 64 in the same converter unit.

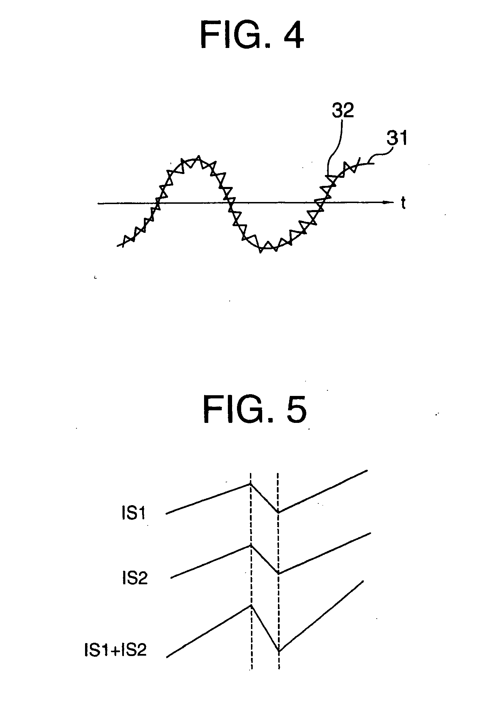

The PWM control device 11 is connected to the ternary winding 45 of the transformer 4, and a carrier wave 32 shown in FIG. 4 is input to the PWM control device 11. By comparing the carrier wave 32 with a reference signal 31 from the ternary winding 45, the ON/OFF timings of the thyristers of the converters 61 to 64 are controlled. Reference numeral 7 denotes a wheel of the electric car.

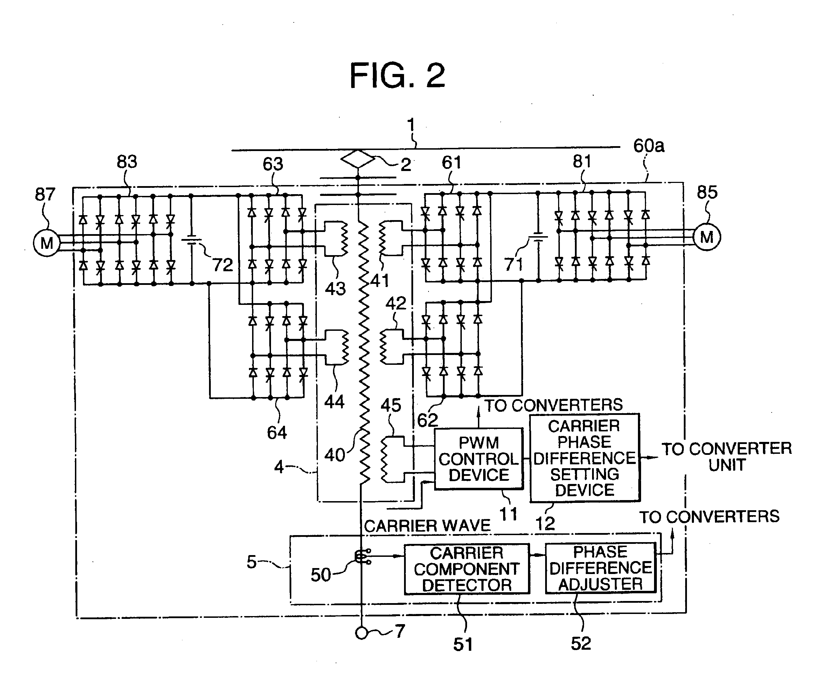

FIG. 2 shows a detailed electric circuit arrangement of each conversion unit. In FIG. 2, each of the converters 61 to 64 is constituted by a single-phase converter comprising a plurality of power semiconductor devices, e.g., a plurality of thyristers and diodes, for converting an AC current into a DC current. Inverters 81 and 83 are constituted by variable-voltage/variable-frequency inverters, comprising a plurality of power semiconductor devices, e.g., a plurality of thyristers and diodes, for converting a DC current into an AC current to supply the AC current to the motors 85 and 87, respectively. The converters 61 and 62 are connected to the inverter 81 through a smoothing capacitor 71, and the converters 63 and 64 are connected to the inverter 83 through a smoothing capacitor 72.

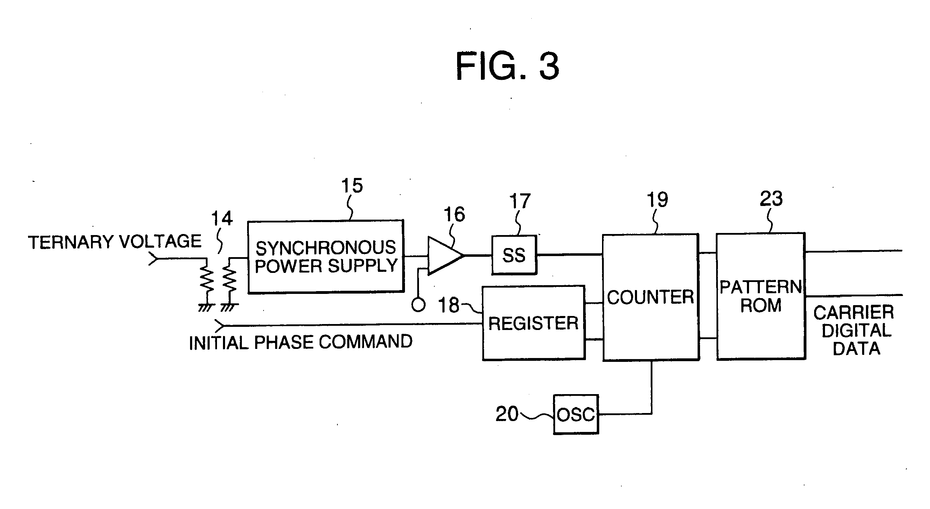

FIG. 3 is a block diagram showing the arrangement of the carrier phase difference setting unit 12. This carrier phase difference setting device 12 is constituted by a measuring transformer 14, a synchronous power supply 15, a zero-cross comparator 16, a one-shot circuit 17, a register 18, a counter 19, an oscillator (OSC) 20, and a pattern ROM 23.

The synchronous power supply 15 lowers a ternary voltage of the ternary winding 45 of the transformer 4 and extracts a fundamental wave component (sine wave). The zero-cross comparator 16 detects the zero point (point where the sine wave changes from negative to positive) of the fundamental component extracted by the synchronous power supply 15, and outputs a pulse when the zero point is detected. The one-shot circuit 17 inputs a one-shot pulse to the counter 19 each time the pulse from the zero-cross comparator 16 is input to the one-shot circuit 17.

The register 18 stores initial phase data in advance, and outputs initial phase data depending on an initial phase input command input by an input means (not shown). When the four converters 61 to 64 exist in one converter unit as shown in FIG. 2, for example, the phase angles θ of carrier waves of the converters 61 to 64 are set at 0°, 90°, 22.5°, and 112.5°, respectively. In this case, the phase difference between the converters 61 and 62 is 90°, and the phase difference between the converters 63 and 64 is 90°. When the phase difference is set at 90° as described above, a harmonic component having a frequency twice the carrier wave frequency can be removed. This is because an amount of a harmonic component of a high order is lower than that of a low order. When the phase difference is set at 90°, a harmonic wave of a low order can be removed.

When the counter 19 receives a pulse from the one-shot circuit 17, the counter 19 receives initial phase data from the register 18. By using the phase data as an initial phase, the counter 19 increments phase angle data each time a signal from the oscillator 20 is input to the counter 19.

An addressed carrier digital data is stored in the pattern ROM 23. The oscillator 20 sets the address of the pattern ROM 23. The pattern ROM 23 sets a pre-stored carrier wave according to the address set by the oscillator 20.

In this manner, by designating the address of the phase angle data of the counter 19, predetermined carrier digital data stored in the pattern ROM 23 is output. Since the carrier phase difference setting device 12 shown in FIG. 3 and described above is arranged in each converter unit, the phases of carrier waves for the converter units can be set by inputting an initial phase command to the register 18.

In the control apparatus for a PWM converter arranged as described above, for example, when the motors 85 and 87 are powered, an AC voltage from the AC line 1 is collected through a pantograph 21, and the corrected AC voltage is lowered and insulated by the transformer 4, and rectified and boosted by the converters 61 to 64, and then smoothed by the smoothing capacitors 71 and 72. The powers smoothed by the smoothing capacitors 71 and 72 are converted into three-phase AC currents by the inverters 81 and 83, respectively. By the converted three-phase AC currents, the AC motors 85 and 87 are driven in parallel with each other.

At this time, the phase difference adjusting means 5 adjusts the phase differences between the converters 61 to 64 such that the carrier frequency of the primary current component of the AC power supply is set at a desired value when the carrier phase difference setting means 12 does not perform a phase difference setting operation.

More specifically, the carrier frequency component detector 51 detects an n-fold frequency component from an output from the current detector 50. If the detected value is a predetermined value or less, the phase difference is increased or decreased by the phase difference adjuster 52 to be adjusted until the detected value becomes the predetermined value or more.

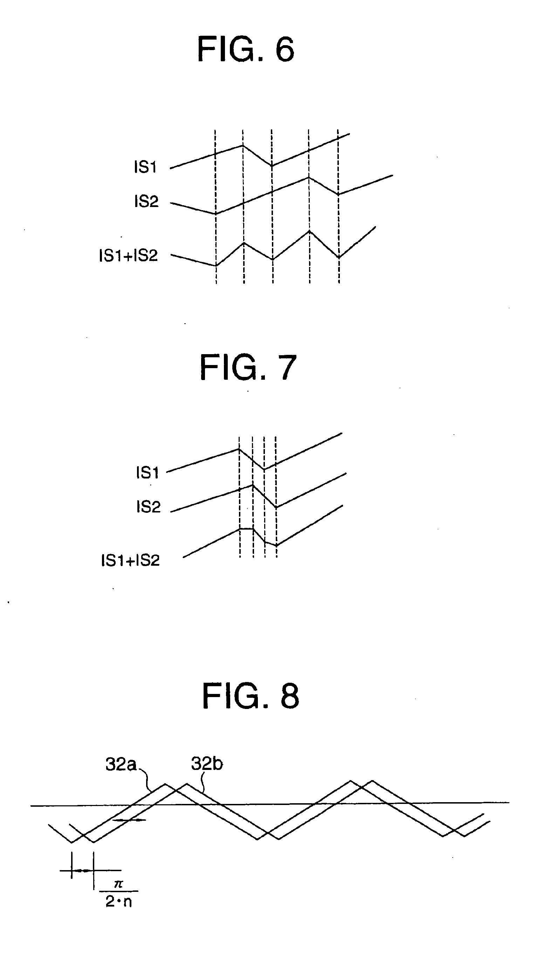

For example, in FIG. 4, reference numeral 31 denotes a reference frequency component, and 32 denotes a primary current of the transformer 4, i.e., a carrier wave. At this time, the ripple component of the carrier wave 32 is a sum of secondary currents converted by the converters 61 and 62 respectively connected to the secondary windings 41 and 42 or the converters 61 to 64 respectively connected to the secondary windings 43 and 44. As this frequency component, if a phase-difference operation is ideally performed, components having a number which is equal to the number of converters 61 and 62 or the number of converters 63 and 64 are generated. A current waveform in this case, for example, as shown in FIG. 5, a doubled or combined component (IS1 + IS2) of secondary winding currents IS1 (winding 41) and IS2 (winding 42) is generated as a primary current. When the operation phases of the secondary windings 41 and 42 are offset from each other, for example, as shown in FIGS. 6 and 7, the doubled or combined component of the carrier is eliminated or reduced. By using this characteristic, as shown in FIG. 8, a phase difference between the phase of a reference carrier wave 32a and the phase of a carrier wave 32b which are basically offset by n/2n is increased or reduced, so that a phase difference at which the detected value of the n-time component of a carrier wave is set at a predetermined value or more or a peak point is determined by the phase difference adjuster 52.

Therefore, an n-fold component of the carrier frequency component of a primary current is detected, and the phases of the converters 61 to 64 is finely adjusted with respect to a pre-designated phase difference (e.g., 0, n/8, 2n/8, or 3n/8) such that the n-fold component is set at a desired value or more. When an error of detection precision of the reference frequencies of the respective converters 61 to 64 and a phase error caused by a difference between delays of ON/OFF-switching operations are corrected, a more ideal phase difference operation can be realized.

FIG. 8 is a view showing an example obtained in setting the initial values of the phase angles of the carrier waves 32a and 32b when n converter units are arranged in the same formation of electric cars. In this case, the initial values are set at equal intervals of n/(2n).

In this manner, when phase differences between carrier waves to be supplied are set for the converters 61 to 64 in the same formation of electric cars, generation of a harmonic current superposed on a power supply current can be suppressed. This principle will be described below with reference to FIG. 6. In consideration of the two converters 61 and 62, when the phases of the carrier waves 32a and 32b of the converters 61 and 62 are offset, as shown in FIG. 6, switching timings are offset. At a timing at which the current instantaneous value IS1 of one converter 61 has a wave crest, the current instantaneous value IS2 of the other converter 62 has a wave trough. When the currents of the two converters 61 and 62 are summed up (IS1 + IS2), the peak of the wave crest of the current instantaneous value IS1 and the peak of the wave trough of the current instantaneous value IS2 are canceled out, the heights of the peaks of the crest and trough of the synthesized current instantaneous value (IS1 + IS2) are lowered, the number of crests and troughs is twice that of the current instantaneous value IS1 or IS2. In other words, the original frequency components (peaks of original crest and trough) disappear, and harmonic components having a number that is twice the number of frequency components are left. Similarly, when the phases of the carrier waves of n converters are offset by equal intervals, harmonic waves having a number up to n times the number of carrier waves can be reduced.

In the above embodiment, the AC motors 85 and 87 are exemplified as electric car loads, and a case wherein the outputs of the converters 61 to 64 are converted into AC currents by the inverters 81 and 83 to operate the AC motors 85 and 87 is described. However, DC loads such as DC motors may be used as electric car loads. In this case, outputs from the converters 61 to 64 may be directly used.

### Embodiment 2

In Embodiment 1 described above, the primary current of the transformer 4, and phase differences are adjusted according to the magnitude of the n-fold component of the carrier component of the primary current. However, primary current components of all converter units 60a to 60d in a formation of cars are summed up, and the n-fold component of the carrier component of the sum is used for control, so that harmonic currents in the formation of all cars can be reduced.

### Embodiment 3

When detection of a primary current component is performed such that the n-fold components of the carrier current components of the converter units 60a to 60d are detected and controlled, the same effect as that in each of the above embodiments can be obtained.

### Embodiment 4

Even if no transformer is used, a converter current voltage component can be detected to make it possible to control phase differences in a similar manner.

As has been described above, according to this invention, since errors in the phase differences of the converter units can be adjusted, even if the detection tolerance of a reference signal is not severely controlled, a harmonic wave can be reduced. More specifically, the n-fold components of the carrier frequency components of AC primary currents of converter units serving as PWM converters are detected to adjust the phase differences of the converter units, thereby contributing to a reduction in harmonic current component.

### Industrial Applicability

This invention can be used to control a plurality of electric car loads mounted on electric cars of the same formation, and harmonic waves can be easily reduced for each formation of electric cars without making a zero-phase (zero-cross) detection tolerance of a reference signal severe.

## Claims

1. A control apparatus for a PWM converter including a plurality of converter units (60a - 60d) for converting AC power of an AC power supply into DC current to supply DC power to a plurality of electric car loads,
wherein each of said converter units comprises:
a transformer (4), arranged to be mounted on an electric car of the same formation and having a primary winding (40), a plurality of secondary windings (41-44) and a ternary winding (45) connected to said AC power supply, for transforming the AC voltage of said AC power supply;
a plurality of converters (61-64), respectively connected to said secondary windings of said transformer, for converting AC power into power;
PWM control means (11), connected to said ternary winding of said transformer, for performing pulse width modulation control of said converters by using a reference signal and carrier waves;
carrier phase difference setting means (12) for offsetting phases of carrier waves supplied to said converters in the same conversion unit with respect to each other and setting desired phase differences between carrier waves supplied to said converter units; and
phase difference adjusting means (5) for adjusting the phase differences of said converters comprising a current detector (50), a carrier frequency component detector (51) and a phase difference adjuster (52), arranged such that in use the carrier frequency component detector detects an n-fold frequency component from an output of the current detector, and, if that detected value is a predetermined value or less, the phase difference adjuster changes the phase difference until the detected value becomes the predetermined value or more.

2. A control apparatus for a PWM converter according to Claim 1, wherein said phase difference adjusting means (5) of said conversion units sets the phase differences of said converters such that the carrier frequency of a total sum of primary currents flowing in said primary windings (40) of said transformers (4) becomes a desired value.

3. A control apparatus for a PWM converter according to Claim 2, wherein said phase difference adjusting means (5) of said converter units set phase differences of said converters such that the carrier frequencies of primary currents flowing in said primary windings (40) of said transformers (4) become a maximum.

4. A control apparatus for a PWM converter according to Claim 1, wherein said phase difference adjusting means (5) of said conversion units set the phase differences of said converters such that a carrier frequency of a total sum of ternary winding (45) voltages of said transformers (4) becomes a desired voltage.

5. A control apparatus for a PWM converter according to Claim 4, wherein said phase difference adjusting means (5) of said converter units sets the phase differences of said converters such that carrier frequencies of ternary winding (45) voltages of said transformers become a maximum.
